# EUROPÄISCHE PATENTSCHRIFT

(11) **EP 4 365 060 B1**
(45) Veröffentlichungstag und Bekanntmachung des Hinweises auf die Patenterteilung: **04.12.2024**
(21) Anmeldenummer: 23205662.2
(22) Anmeldetag: 24.10.2023
(51) Int. Cl.: B62D 1/185, B62D 1/181

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 03.11.2022 BE 202205894
(43) Veröffentlichungstag der Anmeldung: 08.05.2024
(73) Patentinhaber: thyssenkrupp Presta Aktiengesellschaft, 9492 Eschen (LI); thyssenkrupp AG, 45143 Essen (DE)
(72) Erfinder: Raich, Thomas, 6773 Vandans (AT); Blättler, Simon, 9472 Grabs (CH); Galehr, Robert, 9486 Schaanwald (LI)
(74) Vertreter: thyssenkrupp Intellectual Property GmbH

(56) Entgegenhaltungen:
- WO-A1-2014/044881
- DE-B3- 102022 201 101
- FR-A1- 2 727 481
- FR-B1- 2 783 790
- US-A1- 2007 026 952
- US-A1- 2021 213 998
- US-B2- 8 197 348

## Beschreibung

### Stand der Technik

Die Erfindung betrifft eine Lenksäule für ein Kraftfahrzeug, umfassend eine Manteleinheit, in der eine Lenkspindel um eine in Längsrichtung verlaufende Längsachse drehbar gelagert ist, und die mindestens einen in Längsrichtung in einem äußeren Mantelrohr teleskopartig verstellbaren Innenmantel aufweist, umfassend eine Rollenführung mit mindestens einem Lagerträger, der an dem Innenmantel radial abgestützt und verlagerbar ist, und in dem mindestens eine Rolle um eine quer zur Längsachse liegende Rollenachse drehbar gelagert ist, und die Rolle mit ihrem Außenumfang innen an dem Mantelrohr in Längsrichtung abrollbar ist, wobei eine Vorspanneinrichtung mit dem Lagerträger zusammenwirkt, um die Rolle radial gegen das Mantelrohr vorzuspannen.

Zur Eingabe von manuellen Lenkbefehlen ist ein Lenkrad oder eine andere manuelle Lenkhandhabe an dem in Fahrtrichtung hinteren, dem Fahrer zugewandten Ende der Lenkspindel angebracht, die um ihre Längsachse drehbar in einer Manteleinheit der Lenksäule gelagert ist. Die Manteleinheit weist ein äußeres Mantelrohr auf, beispielsweise einen an der Karosserie gehaltenen Außenmantel oder einen darin aufgenommenen Zwischenmantel. In diesem äußeren Mantelrohr ist ein Innenmantel, in dem die Lenkspindel gelagert ist, in der durch die Längsachse gegebenen Längsrichtung teleskopartig verstellbar aufgenommen. Das äußere Mantelrohr ist über eine Trageinheit an der Fahrzeugkarosserie gehalten. Durch Einschieben oder Herausziehen des Innenmantels relativ zum äußeren Mantelrohr kann eine Längsverstellung zur Anpassung der Lenkradposition erfolgen.

Es sind einfache Teleskopanordnungen bekannt, die als teleskopierbare Elemente das Mantellrohr und den Innenmantel umfassen, und auch Drei- oder Mehrfach-Teleskopanordnungen, bei denen das Mantelrohr in einem Außenmantel oder in einem oder mehreren weiteren Mantelrohren teleskopierbar aufgenommen ist.

Um eine leichtgängige und dabei spielarme Verstellung zu ermöglichen, ist es bekannt, zwischen dem Innenmantel und dem Mantelrohr eine lineare Rollenführung vorzusehen, wie beispielsweise in der DE 10 2022 201 101 B3 beschrieben ist. Diese umfasst eine Rolle, die um ihre quer zur Längsachse liegende Rollenachse relativ zum Innenmantel drehbar gelagert ist, die in Längsrichtung auf der Innenseite des Mantelrohrs abrollbar ist. Um ein spielfreies Abrollen zu gewährleisten, ist die Rolle in einem Lagerträger relativ zum Innenmantel radial nach au-βen verlagerbar gelagert. Der Lagerträger wird durch eine Vorspanneinrichtung radial nach au-βen gedrängt, so dass durch die radiale Vorspannung die Rolle im spielfreien Rollkontakt mit der Innenseite des Mantelrohrs gehalten werden kann.

Die bekannte Teleskopanordnung ermöglicht eine leichtgängige, spielfreie Verstellung bei einer hohen Steifigkeit. Dadurch, dass das Vorspannelement wirkungsmäßig axial ausgerichtet und abgestützt ist, kann jedoch eine relativ große axiale Baulänge erforderlich sein. Dadurch kann die Anpassung an den zur Verfügung stehenden Bauraum erschwert werden.

Angesichts der vorangehend erläuterten Problematik ist es eine Aufgabe der vorliegenden Erfindung, eine verbesserte Anpassung an einen vorhandenen Bauraum zu ermöglichen.

### Darstellung der Erfindung

Diese Aufgabe wird erfindungsgemäß gelöst durch die Lenksäule mit den Merkmalen des Anspruchs 1. Vorteilhafte Weiterbildungen ergeben sich aus den Unteransprüchen.

Bei einer Lenksäule für ein Kraftfahrzeug, umfassend eine Manteleinheit, in der eine Lenkspindel um eine in Längsrichtung verlaufende Längsachse drehbar gelagert ist, und die mindestens einen in Längsrichtung in einem äußeren Mantelrohr teleskopartig verstellbaren Innenmantel aufweist, umfassend eine Rollenführung mit mindestens einem Lagerträger, der an dem Innenmantel radial abgestützt und verlagerbar ist, und in dem mindestens eine Rolle um eine quer zur Längsachse liegende Rollenachse drehbar gelagert ist, und die Rolle mit ihrem Außenumfang innen an dem Mantelrohr in Längsrichtung abrollbar ist, wobei eine Vorspanneinrichtung mit dem Lagerträger zusammenwirkt, um die Rolle radial gegen das Mantelrohr vorzuspannen, ist erfindungsgemäß vorgesehen, dass die Vorspanneinrichtung an dem Lagerträger und einem Spannkeil zusammenwirkend ausgebildete Keilflächen aufweist, die gegen eine Umfangsrichtung geneigt sind, wobei der Spannkeil relativ zum Lagerträger in der Umfangsrichtung von einem Spannelement belastet wird.

Die Umfangsrichtung korrespondiert mit der Achsrichtung der Rollenachse. Die Keilflächen sind an dem Lagerträger und/oder an dem Spannkeil ausgebildet und derart angeordnet, dass sie in der Umfangsrichtung, die vom Spannkeil aus gesehen hin zum Lagerträger gerichtet ist, zusammenlaufen. Die Richtung, in der die Keilflächen zusammenlaufen, wird auch als Keilrichtung bezeichnet. Wird der Spannkeil durch das Spannelement in dieser Keilrichtung auf den Lagerträger gerichtet belastet, wird dieser durch die Keilwirkung quer zur Umfangsrichtung radial nach außen gedrängt.

Erfindungsgemäß ist der Spannkeil relativ zum Lagerträger in Umfangsrichtung verlagerbar, und wird in seiner Keilrichtung derart zwischen den Lagerträger und den Innenmantel eingetrieben, dass über die Keilflächen eine quer zur Keilrichtung stehende, bezüglich der Längsachse radial nach außen gerichtete Vorspannkraft auf den Lagerträger ausgeübt wird. Die aus dem Spannkeil und dem Lagerträger gebildete Keilanordnung oder Keilvorrichtung bewirkt somit eine Umlenkung der in Umfangsrichtung von dem Spannelement auf den Spannkeil ausgeübten Spannkraft, welche als radial nach außen gerichtete Vorspannkraft auf den Lagerträger wirkt und die Rolle im Rollkontakt von innen gegen das äußere Mantelrohr andrückt.

Die axiale Baulänge der erfindungsgemäßen Vorspanneinrichtung kann im Wesentlichen durch die in Längsrichtung gemessene Breite des Spannkeils und des Lagerträgers bestimmt werden. Dadurch, dass diese Abmessung relativ frei gestaltet und entsprechend klein dimensioniert werden kann, wird ein vorteilhaft kleinerer Bauraum und eine kürzere Baulänge als im Stand der Technik ermöglicht.

Ein weiterer Vorteil ist, dass konstruktiv einfach durch den zwischen den Keilflächen eingeschlossenen Keilwinkel das Kraftübersetzungsverhältnis zwischen der von dem Spannelement auf den Spannkeil in Umfangsrichtung eingeleiteten Spannkraft und der dadurch auf die Rolle ausgeübten radialen Vorspannkraft vorgegeben werden kann. Dabei bewirkt ein relativ flacher, d.h. spitzer Keilwinkel eine große Kraftübersetzung. Bevorzugt kann der Keilwinkel in einem Bereich zwischen 5° und 30° liegen, besonders bevorzugt bei etwa 15°.

Es ist bevorzugt vorgesehen, dass das Spannelement ein Federelement aufweist. Das Federelement bildet ein krafterzeugendes Element, das in Umfangsrichtung auf den Spannkeil eine elastische Spannkraft ausübt, die über die Keilvorrichtung die Rolle elastisch im Rollkontakt belastet. Dadurch kann konstruktiv einfach und dauerhaft funktionssicher eine gleichmäßige Vorspannung gewährleistet werden.

Es ist vorteilhaft, dass der Spannkeil an dem Innenmantel in der Umfangsrichtung geführt und radial nach innen abgestützt ist. Durch die Führung in Umfangsrichtung ist eine sichere Funktion der Keilvorrichtung unter hohen Beanspruchungen gewährleistet, beispielsweise bei hohen Querkräften. Dadurch, dass der Spannkeil in radialer Richtung quer zu seiner Keilrichtung radial nach innen, auf die Längsachse zu, an dem Innenmantel abgestützt ist, wird der Lagerträger definiert radial nach außen gedrückt, wenn der Spannkeil in der Keilrichtung durch das Spannelement zwischen Lagerträger und Innenmantel eingetrieben wird. Die Führung in Umfangsrichtung und die radiale Abstützung kann konstruktiv einfach mittels einer Gleitführung realisiert sein, beispielsweise einer Nutführung, in der der Spannkeil in Umfangsrichtung entlanggleiten kann.

Bevorzugt ist es möglich, dass das Spannelement in Umfangsrichtung zwischen einem Widerlager des Innenmantels und dem Spannkeil angeordnet ist. Das Spannelement übt als krafterzeugendes Element eine Spannkraft in Umfangsrichtung auf den Spannkeil aus. Es kann eine Druckfeder aufweisen, beispielsweise eine Schraubenfeder, ein Tellerfederpaket oder dergleichen. Das Widerlager und der Spannkeil stehen sich in Umfangsrichtung einander gegenüber, wobei das Spannelement bevorzugt unter Vorspannung dazwischen eingesetzt ist. Beispielsweise kann eine Druckfeder so weit zusammendrückt eingefügt sein, dass die federnde Rückstellkraft der erforderlichen Spannkraft entspricht. Das Widerlager kann dabei konstruktiv einfach an dem Innenmantel ausgebildet sein, beispielsweise in Form einer Radialfläche, die auch in einer Ausnehmung ausgebildet sein kann.

Es kann bevorzugt vorgesehen sein, dass zwei Spannkeile einander in Umfangsrichtung gegenüberliegen und mit jeweils korrespondierenden Keilflächen des Lagerträgers zusammenwirken. Die zwei Spannkeile weisen mit ihren entgegengesetzten Keilrichtungen in Umfangsrichtung aufeinander zu. Die Keilanordnung kann bevorzugt spiegelsymmetrisch zu einer Radialebene ausgebildet sein, die zwischen den Spannkeilen senkrecht zur Umfangsrichtung steht und in der die Längsachse liegt. Die korrespondierenden Keilflächen am Lagerträger stehen in einem stumpfen Winkel zueinander, dessen Spitze nach innen auf die Längsachse zu gerichtet ist. Die symmetrische Anordnung ist vorteilhaft zur Erzeugung einer gleichmäßigen radialen Vorspannkraft.

In der vorgenannten Ausführung ist es mit Vorteil möglich, dass jeder der beiden Spannkeile über ein Spannelement, beispielsweise ein Federelement wie eine Druckfeder oder dergleichen, gegen ein Widerlager an dem Innenmantel in Umfangsrichtung vorgespannt abgestützt ist. Die aus den beiden Spannkeilen und dem Lagerträger gebildete Keileinrichtung kann dadurch in Umfangsrichtung zwischen den beiden Spannelementen quasi schwimmend elastisch gehalten sein. Dadurch können äußere Krafteinwirkungen, beispielsweise durch Lastwechsel oder dergleichen, von der Rollenführung elastisch und verkantungsfrei aufgenommen werden.

Es kann vorgesehen sein, dass der Lagerträger an Führungsflächen des Innenmantels geführt ist. Beispielsweise kann der Lagerträger mit zumindest einer radial gerichteten Bewegungskomponente der Führung auf den Führungsflächen entlanggleiten. Dadurch wird eine definierte Verlagerung des Lagerträgers relativ zum Innenmantel entlang einer radialen Führungsbahn vorgegeben, wenn der Spannkeil in Umfangsrichtung zwischen Innenmantel und Lagerträger eingetrieben wird. Dabei kann der Lagerträger beispielsweise in einer Gleitführung derart geführt sein, dass die Vorspannkraft in der durch die Führung definierten Richtung in die Rollen eingeleitet wird.

Es kann bevorzugt vorgesehen sein, dass der Lagerträger in einer Durchbrechung des Innenmantels angeordnet ist. Die Durchbrechung kann als eine nach außen durchgehende Öffnung oder auch als Ausnehmung in der Außenseite des Innenmantels ausgebildet sein. Die Durchbrechung kann Führungsflächen aufweisen, an denen der Lagerträger in radialer Richtung geführt ist. Weiterhin kann die Durchbrechung Widerlager aufweisen, zur Abstützung des oder der Spannelemente und/oder des oder der Spannkeile in Umfangsrichtung, und/oder zur radialen Abstützung des oder der Spannkeile. In Umfangsrichtung erstreckt sich die Durchbrechung oder Ausnehmung bevorzugt über einen Winkelabschnitt von kleiner 90°.

Es kann bevorzugt vorgesehen sein, dass die Rolle in einer senkrecht zur Längsachse stehenden Vorspannebene angeordnet ist, in der mindestens zwei feststehende Stützrollen über den Umfang verteilt angeordnet sind. In der Vorspannebene sind somit die erfindungsgemäß vorgespannte Rolle und mindestens zwei jeweils in einem radial feststehenden Lager gelagerte Stützrollen über den Umfang verteilt an dem Innenmantel gelagert. Durch die in die vorgespannte Rolle eingeleitete Vorspannkraft werden die Stützrollen ebenfalls von innen gegen das äußere Mantelrohr angepresst. Bevorzugt können genau zwei in Umfangsrichtung beabstandete Stützrollen in einem den vorgespannten Rollen bezüglich der Längsachse gegenüberliegenden Umfangsbereich angeordnet sein. Dadurch wird in einer Vorspannebene eine Drei-Rollen-Lagerung realisiert, die im Hinblick auf eine hohe Steifigkeit und Funktionssicherheit vorteilhaft ist.

Vorzugsweise kann eine spiegelsymmetrische Anordnung der Rolle und der Stützrollen bezüglich einer zwischen den Rollen stehenden Radialebene realisiert sein.

Es ist möglich, dass die Rolle in dem Lagerträger in einem Gleitlager drehbar gelagert ist. Dabei kann die Rolle auf einer Achse, beispielsweise einem Lagerbolzen, drehbar gelagert sein, die in dem Lagerträger aufgenommen ist. Das Gleitlager hat den Vorteil einer hohen Steifigkeit und Eigenfrequenz der Lageranordnung.

Alternativ ist es möglich, dass die Rolle in dem Lagerträger in einem Wälzlager drehbar gelagert ist. Dabei kann die Rolle auf einer Achse, beispielsweise einem Lagerbolzen oder dergleichen, die in dem Lagerträger aufgenommen ist, über umlaufend abrollbare Wälzkörper drehbar gelagert sein, beispielsweise einen Nadelkranz. Ein derartiges Wälzlager hat den Vorteil einer geringen Lagerreibung, was einer leichten Verstellung zugute kommt.

Es ist möglich, dass der Innenmantel einen Mehrkant-Außenquerschnitt aufweist. Der Innenmantel kann dabei als im Querschnitt mehrkantiges Mehrkantprofil mit zumindest einem mehrkantigen Außenprofil ausgebildet sein, beispielsweise als Vier-, Sechs-, Acht-, Zehn- oder Zwölfkant-Profil. Der Durchgangsquerschnitt des äußeren Mantelrohrs, in dem der Innenmantel teleskopierbar aufgenommen ist, korrespondiert mit dessen mehrkantigen Außenprofil. Die Rollen können zwischen den Kanten auf den bevorzugt ebenen Seitenflächen des Mehrkantprofils abrollen, wobei der Rollkontakt zwischen den Rollen und dem Mantelrohr breiter ist als bei einem kreisrunden Querschnitt, was vorteilhaft im Hinblick auf eine hohe Steifigkeit und eine geringere Flächenpressung ist. Ein weiterer Vorteil ist die eindeutig definierte, verdrehsichere Anordnung des Innenmantels im Mantelrohr.

Es kann weiter vorgesehen sein, dass das Mantelrohr in einem Außenmantel teleskopierbar aufgenommen ist. Auf diese Weise kann eine Mehrfach-Teleskopanordnung mit mindestens drei teleskopierbaren Elementen bereitgestellt werden, nämlich dem Innenmantel, dem Mantelrohr und dem Außenmantel. Dazwischen können bei Bedarf noch weitere Mantelrohre eingefügt sein. Mehrfach-Teleskopanordnungen ermöglichen ein größeres Verhältnis zwischen dem maximal verkürzten und dem maximal verlängerten Verstellzustand der Lenksäule.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: die Lenksäule gemäß Figur 1 in einer Ansicht von oben,
- Figur 3: einen Schnitt B-B durch die Lenksäule gemäß Figur 1,
- Figur 4: eine vergrößerte Detailansicht aus Figur 3,
- Figur 5: der Innenmantel der Lenksäule gemäß Figur 1 in einer freigestellten schematischen perspektivischen Ansicht,
- Figur 6: der Innenmantel der Lenksäule gemäß Figur 1 in einer weiteren freigestellten schematischen perspektivischen Ansicht ähnlich Figur 5,

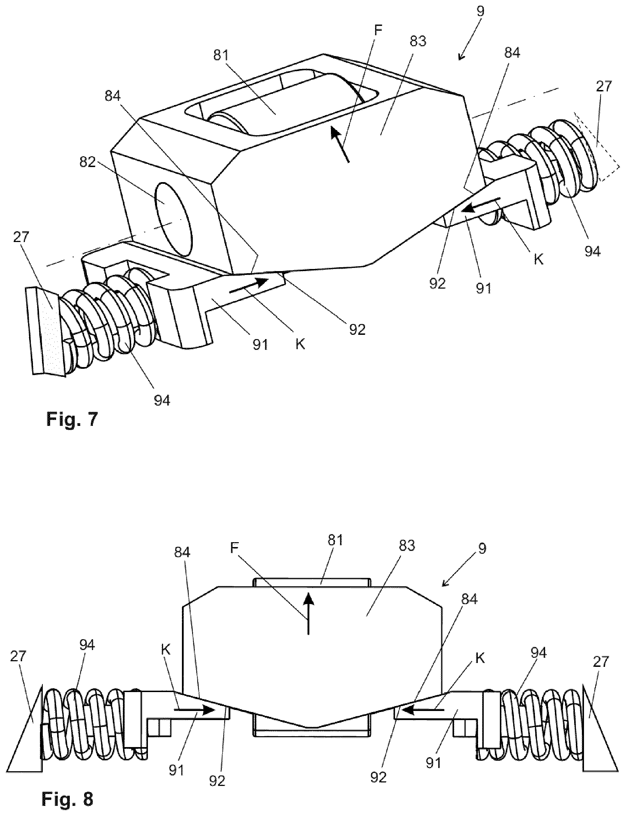

- Figur 7: eine schematisch freigestellte Teilansicht einer erfindungsgemäßen Vorspanneinrichtung,
- Figur 8: eine weitere Ansicht einer Vorspanneinrichtung gemäß Figur 7.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

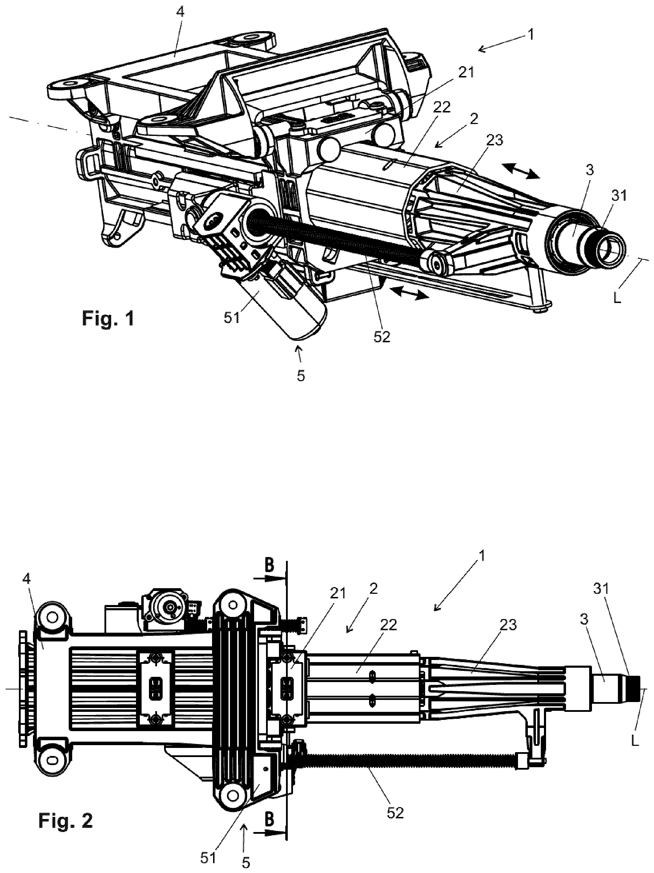

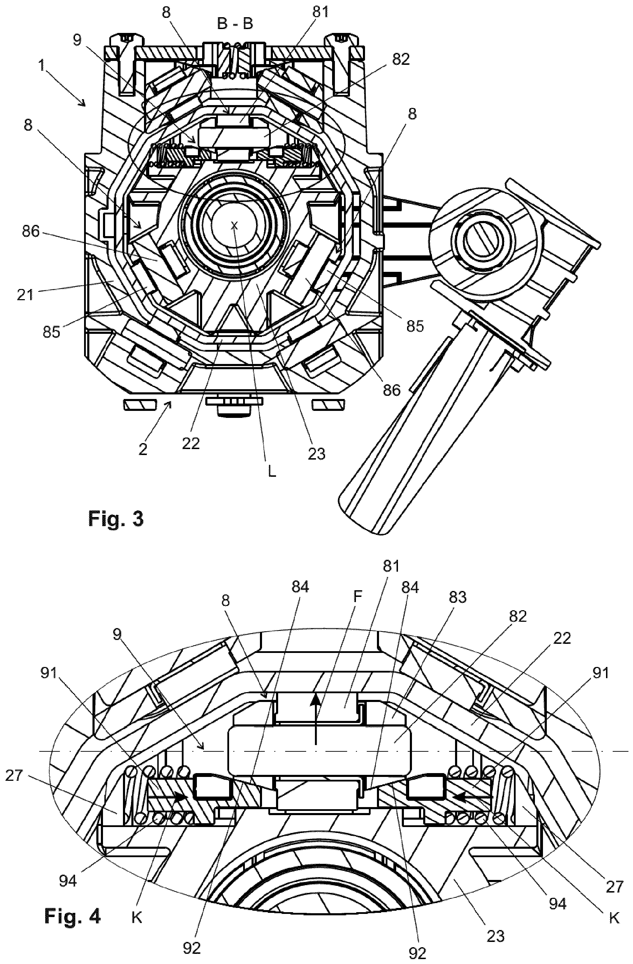

Fig. 1 zeigt eine erfindungsgemäße Lenksäule 1 bezüglich der Fahrtrichtung in einer Seitenansicht, wobei die Fahrtrichtung nach rechts weist. Figur 2 zeigt eine Ansicht von oben. In Figur 3 ist ein Querschnitt B-B aus Figur 2 dargestellt, der in Figur 3 in einer vergrößerten Detaildarstellung wiedergegeben ist.

Die Lenksäule 1 weist eine Manteleinheit 2 auf, die einen Außenmantel 21 und ein darin in der Längsrichtung einer Längsachse L teleskopierend verstellbar aufgenommenes äußeres Mantelrohr 22 umfasst, und einen in dem Mantelrohr 22 ebenfalls in Längsrichtung teleskopierbar aufgenommenen Innenmantel 23, wie mit dem Doppelpfeil angedeutet ist. Der Außenmantel 21, das Mantelrohr 22 und der Innenmantel 23 können gemeinsam auch als die Teleskopelemente 21, 22, 23 bezeichnet werden.

Das Mantelrohr 22 ist im gezeigten Beispiel als Mehrkant-Hohlprofil ausgebildet, konkret als 12-Kant-Rohr. Der darin aufgenommene Innenmantel 23 weist einen damit korrespondierenden 12-kantigen Außenquerschnitt auf.

In der Manteleinheit 2 ist eine Lenkspindel 3 um die Längsachse L drehbar gelagert. An einem bezüglich der Fahrtrichtung hinteren, in Einbaulage auf die Fahrerposition gerichteten Endabschnitt weist die Lenkspindel 3 einen Anschlussabschnitt 31 zur Anbringung einer hier nicht dargestellten manuellen Lenkhandhabe auf, beispielsweise eines Lenkrads.

Die Manteleinheit 2, konkret der Außenmantel 21 ist von einer Trageinheit 4 gehalten, die an einer hier nicht gezeigten Fahrzeugkarosserie anbringbar ist.

Zwischen dem Innenmantel 21 und dem Außenmantel 23 ist ein elektromotorischer Verstellantrieb 5 angeordnet, der als Spindeltrieb ausgestaltet ist. Dieser umfasst eine an dem Außenmantel 23 festgelegte Antriebseinheit 51, welche eine - hier nicht explizit dargestellte - Spindelmutter aufweist, die von einem elektrischen Motor um ihre Gewindeachse drehend antreibbar ist, und in die eine Gewindespindel 52 eingreift. Mit ihrem freien Ende ist die Gewindespindel 52 drehfest und in Längsrichtung fix mit dem Innenmantel 23 verbunden. Durch drehenden Antrieb der Spindelmutter kann die Gewindespindel 52 je nach Drehrichtung relativ zur Antriebseinheit 51 vor oder zurück bewegt werden, wie mit dem Doppelpfeil in Figur 1 angedeutet ist. Dadurch können der Innenmantel 23 und das Mantelrohr 22 relativ zum Außenmantel 21 in Längsrichtung teleskopierend ein- oder ausgefahren werden.

Eine Rollenführung 8, die in Figur 3 und 4 erkennbar ist, umfasst eine Rolle 81, die um eine quer zur Längsachse liegende Rollenachse 82 in einem Lagerträger 83 drehbar gelagert ist. Der Lagerträger 83 ist an dem Innenmantel 23 abgestützt und radial relativ dazu verlagerbar. Die Rolle 81 ist im Rollkontakt radial nach außen gegen die Innenseite des Mantelrohrs 22 vorgespannt, wie im Folgenden noch erläutert wird.

Mit dem Lagerträger 83 wirkt eine erfindungsgemäße Vorspanneinrichtung 9 zusammen. Diese weist zwei Spannkeile 91 auf, die jeweils gegen die Umfangsrichtung, die der Achsrichtung der Rollenachse 82 entspricht, geneigte Keilflächen 92 aufweisen. Diese laufen jeweils in Keilrichtung K zusammen. Die Keilrichtungen K der beiden Spannkeile 91 sind in Umfangsrichtungen gegeneinander gerichtet, wie in Figur 4 mit den in die Spannkeile 91 eingezeichneten Pfeilen angedeutet ist.

Die Keilflächen 92 der Spannkeile 91 liegen gleitend gegen korrespondierende Keilflächen 84 an dem Lagerträger 83 an.

Jeder der beiden Spannkeile 91 ist jeweils über ein Federelement 94, im Beispiel eine als Druckfeder ausgebildete Schraubenfeder, in Umfangsrichtung jeweils gegen ein Widerlager 27 an dem Innenmantel 23 abgestützt. Mit dem anderen Ende ist jedes Federelement 94 jeweils in Umfangsrichtung gegen einen der Spannkeile 91 federnd verspannt. Dadurch wird auf die Spannkeile 91 in den gegeneinander gerichteten Keilrichtungen K - die mit Pfeilen eingezeichnet sind - eine elastische Spannkraft aufgebracht. Dadurch werden die Spannkeile 91 in Umfangsrichtung zwischen die Außenseite des Innenmantels 32 und die Keilflächen 84 des Lagerträgers 83 eingetrieben. Dabei wird dieser durch die Keilwirkung radial nach außen gedrängt, wie in Figur 4 mit dem in die Rolle 81 eingezeichneten, nach oben gerichteten Pfeil angedeutet ist, der die Vorspannkraft F bezeichnet, mit der die Rolle 81 im Rollkontakt gegen die Innenseite des Mantelrohrs 22 angedrückt wird.

Die beschriebene Erzeugung und Aufbringung der Vorspannkraft F ist anhand der schematisch freigestellten Darstellungen der Vorspanneinrichtung 9 noch einmal verdeutlicht. Daraus ist ersichtlich, wie die in entgegengesetzten Keilrichtungen K durch die Federelemente 94 auf die Spannkeile 91 ausgeübte Spannkraft (Federkraft) über die korrespondierenden Keilflächen 92 und 84 auf den Lagerträger 83 übertragen und in eine radiale Vorspannkraft F der Rolle 81 umgesetzt wird.

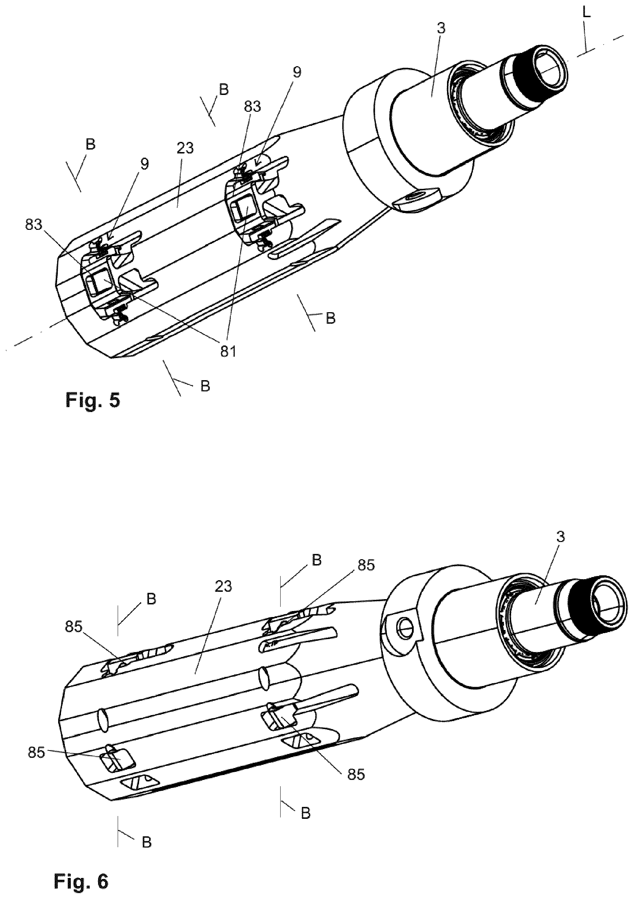

Der Querschnitt B-B gemäß Figur 3 definiert eine Vorspannebene. Die axial versetzte Anordnung von zwei erfindungsgemäßen Vorspanneinrichtungen 9 an dem Innenmantel 23 in zwei axial beabstandeten Vorspannebenen ist in Figur 5 gezeigt, die darin wegen der prinzipiell gleichartigen Ausgestaltung beide mit B-B bezeichnet sind.

Neben der erfindungsgemäß vorgespannten Rolle 81 weist die Rollenführung 8 zwei um feste Achsen 86 drehbar am Innenmantel 23 gelagerte Stützrollen 85 auf, die ebenfalls auf der Innenseite des Mantelrohrs 22 in Längsrichtung abrollen können. Die Stützrollen 85 sind relativ zu der Rolle 81 symmetrisch auf dem Umfang angeordnet, im gezeigten Beispiel um 120° versetzt. Es können bevorzugt jeweils zwei Stützrollen 85 zusammen mit einer vorgespannten Rolle 81 in einer Vorspannebene B-B angeordnet sein, wie in den Figuren 5 und 6 angedeutet ist.

### Bezugszeichenliste

- 1: Lenksystem
- 2: Manteleinheit
- 21: Außenmantel
- 22: Mantelrohr
- 23: Innenmantel
- 27: Widerlager
- 3: Lenkspindel
- 31: Anschlussabschnitt
- 4: Trageinheit
- 5: Verstellantrieb
- 51: Antriebseinheit
- 52: Gewindespindel
- 8: Rollenführung
- 81: Rolle
- 82: Rollenachse
- 83: Lagerträger
- 84: Keilfläche
- 85: Stützrolle
- 86: Achse
- 9: Vorspanneinrichtung
- 91: Spannkeil
- 92: Keilfläche
- 94: Federelement

- L: Längsachse
- K: Keilrichtung
- F: Vorspannkraft
- B-B: Vorspannebene

## Patentansprüche

1. Lenksäule (1) für ein Kraftfahrzeug, umfassend eine Manteleinheit (2), in der eine Lenkspindel (3) um eine in Längsrichtung verlaufende Längsachse (L) drehbar gelagert ist, und die mindestens einen in Längsrichtung in einem äußeren Mantelrohr (22) teleskopartig verstellbaren Innenmantel (23) aufweist, umfassend eine Rollenführung mit mindestens einem Lagerträger (83), der an dem Innenmantel (23) radial abgestützt und verlagerbar ist, und in dem mindestens eine Rolle (81) um eine quer zur Längsachse (L) liegende Rollenachse (82) drehbar gelagert ist, und die Rolle (81) mit ihrem Außenumfang innen an dem Mantelrohr (22) in Längsrichtung abrollbar ist, wobei eine Vorspanneinrichtung (9) mit dem Lagerträger (83) zusammenwirkt, um die Rolle (81) radial gegen das Mantelrohr (22) vorzuspannen,
**dadurch gekennzeichnet,**
**dass** die Vorspanneinrichtung (9) an dem Lagerträger (83) und einem Spannkeil (91) zusammenwirkend ausgebildete Keilflächen (84, 92) aufweist, die gegen eine Umfangsrichtung geneigt sind, wobei der Spannkeil (91) relativ zum Lagerträger (83) in der Umfangsrichtung von einem Spannelement (94) belastet wird.

2. Lenksäule nach Anspruch 1, **dadurch gekennzeichnet, dass** das Spannelement (94) ein Federelement aufweist.

3. Lenksäule nach einem der vorangehenden Ansprüche, **dadurch gekennzeichnet, dass** der Spannkeil (91) an dem Innenmantel (23) in der Umfangsrichtung geführt und radial nach innen abgestützt ist.

4. Lenksäule nach einem der vorangehenden Ansprüche, **dadurch gekennzeichnet, dass** das Spannelement (94) in Umfangsrichtung zwischen einem Widerlager (27) des Innenmantels (23) und dem Spannkeil (91) angeordnet ist.

5. Lenksäule nach einem der vorangehenden Ansprüche, **dadurch gekennzeichnet, dass** zwei Spannkeile (91) einander in Umfangsrichtung gegenüberliegen und mit jeweils korrespondierenden Keilflächen (84) des Lagerträgers (83) zusammenwirken.

6. Lenksäule nach einem der vorangehenden Ansprüche, **dadurch gekennzeichnet, dass** der Lagerträger (83) an Führungsflächen des Innenmantels (23) geführt ist.

7. Lenksäule nach einem der vorangehenden Ansprüche, **dadurch gekennzeichnet, dass** der Lagerträger (23) in einer Durchbrechung des Innenmantels (23) angeordnet ist.

8. Lenksäule nach einem der vorangehenden Ansprüche, **dadurch gekennzeichnet, dass** die Rolle (81) in einer senkrecht zur Längsachse (L) stehenden Vorspannebene (A-A) angeordnet ist, in der mindestens zwei feststehende Stützrollen (85) über den Umfang verteilt angeordnet sind.

9. Lenksäule nach einem der vorangehenden Ansprüche, **dadurch gekennzeichnet, dass** die Rolle (81) in dem Lagerträger (83) in einem Gleitlager drehbar gelagert ist.

10. Lenksäule nach einem der vorangehenden Ansprüche, **dadurch gekennzeichnet, dass** die Rolle (81) in dem Lagerträger (83) in einem Wälzlager drehbar gelagert ist.

11. Lenksäule nach einem der vorangehenden Ansprüche, **dadurch gekennzeichnet, dass** der Innenmantel (23) einen Mehrkant-Außenquerschnitt aufweist.

12. Lenksäule nach einem der vorangehenden Ansprüche, **dadurch gekennzeichnet, dass** der Mantelrohr (22) in einem weiteren äußeren Mantel (21) teleskopierbar aufgenommen ist.

## Claims

1. Steering column (1) for a motor vehicle, comprising a casing unit (2), in which a steering spindle (3) is mounted so as to be rotatable about a longitudinal axis (L) running in the longitudinal direction, and which has at least one inner casing (23) telescopically adjustable in the longitudinal direction in an outer casing tube (22), comprising a roller guide having at least one bearing support (83), which is radially supported and movable on the inner casing (23), and in which at least one roller (81) is mounted so as to be rotatable about a roller axis (82) which is transverse to the longitudinal axis (L), and the roller (81) can be rolled in the longitudinal direction with its outer circumference against the inside of the casing tube (22), wherein a preloading device (9) interacts with the bearing support (83) in order to preload the roller (81) radially against the casing tube (22),
**characterized**
**in that** the preloading device (9) has interacting wedge surfaces (84, 92) on the bearing support (83) and a biasing wedge (91), which surfaces are inclined with respect to a circumferential direction, wherein the biasing wedge (91) is loaded in the circumferential direction relative to the bearing support (83) by a biasing element (94).

2. Steering column according to Claim 1, **characterized in that** the biasing element (94) comprises a spring element.

3. Steering column according to any one of the preceding claims, **characterized in that** the biasing wedge (91) is guided in the circumferential direction on the inner casing (23) and is supported radially inwards.

4. Steering column according to any one of the preceding claims, **characterized in that** the biasing element (94) is arranged between an abutment (27) of the inner casing (23) and the biasing wedge (91) in the circumferential direction.

5. Steering column according to any one of the preceding claims, **characterized in that** two biasing wedges (91) lie opposite one another in the circumferential direction and interact with respective corresponding wedge surfaces (84) of the bearing support (83).

6. Steering column according to any one of the preceding claims, **characterized in that** the bearing support (83) is guided on guide surfaces of the inner casing (23).

7. Steering column according to any one of the preceding claims, **characterized in that** the bearing support (23) is arranged in an aperture of the inner casing (23).

8. Steering column according to any one of the preceding claims, **characterized in that** the roller (81) is arranged in a preloading plane (A-A) perpendicular to the longitudinal axis (L), in which at least two fixed supporting rollers (85) are arranged in a manner distributed over the circumference.

9. Steering column according to any one of the preceding claims, **characterized in that** the roller (81) is rotatably mounted in a plain bearing in the bearing support (83).

10. Steering column according to any one of the preceding claims, **characterized in that** the roller (81) is rotatably mounted in a rolling bearing in the bearing support (83).

11. Steering column according to any one of the preceding claims, **characterized in that** the inner casing (23) has a polygonal outer cross section.

12. Steering column according to any one of the preceding claims, **characterized in that** the casing tube (23) is accommodated telescopically in a further outer casing (21).

## Revendications

1. Colonne de direction (1) pour un véhicule automobile, comprenant une unité d'enveloppe (2) dans laquelle un arbre de direction (3) est monté à rotation autour d'un axe longitudinal (L) s'étendant dans la direction longitudinale, et qui présente au moins une enveloppe intérieure (23) réglable de manière télescopique dans la direction longitudinale dans un tube d'enveloppe extérieur (22), comprenant un guidage de galet avec au moins un support de palier (83), qui s'appuie radialement sur l'enveloppe intérieure (23) et peut être déplacé, et dans lequel au moins un galet (81) est monté à rotation autour d'un axe de galet (82) transversal à l'axe longitudinal (L), et le galet (81) peut être déroulé avec sa périphérie extérieure à l'intérieur du tube d'enveloppe (22) dans la direction longitudinale, un dispositif de précontrainte (9) coopérant avec le support de palier (83) pour précontraindre le galet (81) radialement contre le tube d'enveloppe (22),
**caractérisé en ce que**
**en ce que** le dispositif de précontrainte (9) présente, sur le support de palier (83) et un coin de serrage (91), des surfaces en coin (84, 92) réalisées de manière à coopérer, qui sont inclinées par rapport à une direction périphérique, le coin de serrage (91) étant sollicité par rapport au support de palier (83) dans la direction périphérique par un élément de serrage (94).

2. Colonne de direction selon la revendication 1, **caractérisée en ce que** l'élément de serrage (94) comporte un élément de ressort.

3. Colonne de direction selon l'une des revendications précédentes, **caractérisée en ce que** le coin de serrage (91) est guidé sur l'enveloppe intérieure (23) dans la direction circonférentielle et est supporté radialement vers l'intérieur.

4. Colonne de direction selon l'une des revendications précédentes, **caractérisée en ce que** l'élément de serrage (94) est disposé circonférentiellement entre une butée (27) de l'enveloppe intérieure (23) et le coin de serrage (91).

5. Colonne de direction selon l'une des revendications précédentes, **caractérisée en ce que** deux coins de serrage (91) sont opposés l'un à l'autre dans la direction circonférentielle et coopèrent avec des surfaces de coin (84) correspondantes respectives du support de palier (83).

6. Colonne de direction selon l'une des revendications précédentes, **caractérisée en ce que** le support de palier (83) est guidé sur des surfaces de guidage de l'enveloppe intérieure (23).

7. Colonne de direction selon l'une des revendications précédentes, **caractérisée en ce que** le support de palier (23) est disposé dans une ouverture de l'enveloppe intérieure (23).

8. Colonne de direction selon l'une des revendications précédentes, **caractérisée en ce que** le galet (81) est disposé dans un plan de précontrainte (A-A) perpendiculaire à l'axe longitudinal (L), dans lequel sont disposés au moins deux galets d'appui fixes (85) répartis sur la circonférence.

9. Colonne de direction selon l'une des revendications précédentes, **caractérisée en ce que** le galet (81) est monté à rotation dans le support de palier (83) dans un palier lisse.

10. Colonne de direction selon l'une des revendications précédentes, **caractérisée en ce que** le galet (81) est monté à rotation dans le support de palier (83) dans un palier à roulement.

11. Colonne de direction selon l'une des revendications précédentes, **caractérisée en ce que** l'enveloppe intérieure (23) présente une section extérieure polygonale.

12. Colonne de direction selon l'une des revendications précédentes, **caractérisée en ce que** le tube d'enveloppe (22) est reçu de manière télescopique dans une autre enveloppe extérieure (21).
